# EUROPÄISCHE PATENTSCHRIFT

(11) **EP 2 380 783 B1**
(45) Veröffentlichungstag und Bekanntmachung des Hinweises auf die Patenterteilung: **19.09.2012**
(21) Anmeldenummer: 11163351.7
(22) Anmeldetag: 21.04.2011
(51) Int. Cl.: B60R 19/40, B60R 19/34, F16F 7/12

(54) **Crashbauteil**
Crash component
Composant anticollision

(30) Priorität: 21.04.2010 DE 102010017885
(43) Veröffentlichungstag der Anmeldung: 26.10.2011
(73) Patentinhaber: Benteler Automobiltechnik GmbH, 33102 Paderborn (DE)
(72) Erfinder: Handing, Christian, 33449, Langenberg (DE); Arzoumanian, Kegham, 33104, Paderborn (DE); Hitz, Andreas, 59597, Erwitte (DE); Buschsieweke, Otto, 33102, Paderborn (DE)
(74) Vertreter: Griepenstroh, Jörg

(56) Entgegenhaltungen:
- DE-A1- 10 159 864
- FR-A1- 2 896 213

## Beschreibung

Die vorliegende Erfindung betrifft ein Bauteil für ein Kraftfahrzeug gemäß dem Oberbegriff des Patentanspruchs 1.

Kraftfahrzeuge sind heutzutage üblicherweise sowohl an der Vorderseite als auch an der Rückseite mit einem Stoßfänger versehen. Diese Stoßfänger dienen dem Schutz des Fahrzeugs selber bei einem Aufprall und auch dem Schutz eines potentiellen Unfallpartners bei einem Zusammenstoß.

Konventionelle Stoßfänger bestehen aus einer quer zum Fahrzeug liegenden, leicht über die Karosserie hervorstehenden Prallfläche, die mit einem dahinter liegenden Querträger des Fahrzeugs verbunden ist.

Die Stoßfänger und auch die dahinter liegenden Querträger nehmen bei einem Aufprall kinetische Energie auf und wandeln diese in Verformungsenergie um. Bei einem Aufprall mit geringen Geschwindigkeiten werden meist nur elastische Teile des Stoßfängers verformt, so dass es zu keinen nennenswerten Beschädigungen des Fahrzeugs kommt. Dies geschieht beispielsweise im Falle eines Zusammenstoßes mit einem Fußgänger, wofür ein Stoßfängersystem einen besonderen Fußgängerschutzraum aufweist.

Bei einem Aufprall mit höherer Geschwindigkeit ist auch eine höhere Stoßenergie aufzunehmen, die es in Form von Verformungsenergie abzubauen gilt. Hierzu haben Stoßfängersysteme meist Crashboxen, die speziell zur Energieumwandlung von Stoßenergie in Verformungsenergie vorgesehen sind.

Die Stoßfängersysteme werden kontinuierlich optimiert und sowohl durch die Fahrzeughersteller als auch durch die Gesetzgebung werden an sie beständig höhere Anforderungen gestellt.

Im Rahmen der Reduzierung von CO2-Ausstößen eines Kraftfahrzeugs und der Minimierung des Kraftstoffverbrauchs gilt es, Kraftfahrzeuge mit möglichst geringem Gewicht zu konstruieren, bei gleichzeitig besonders strömungsgünstiger Außenform. Dies steht oftmals entgegen der Steigerung der Crashsicherheit für sowohl weiche als auch harte Stöße, die in Form eines Unfalls mit geringer oder hoher Geschwindigkeit auftreten.

Insbesondere besteht im Zusammenspiel mit anderen Fahrzeugkomponenten, beispielsweise Ladeluftkühlern oder ähnlichem, eine Bauraumknappheit, so dass Crashelemente mit den anderen Fahrzeugkomponenten bei der Konstruktion eines Kraftfahrzeugs konkurrieren müssen.

Beispielsweise ist aus der DE 101 59 864 A1 ein Kraftfahrzeug mit einer Fronthaube und einer durch eine Verschalung verkleideten Stoßfängeranordnung bekannt, wobei die Stoßfängeranordnung einen mit den Längsträgern eines Kraftfahrzeugrahmens wenigstens mittelbar verbundenen Querträger umfasst. Die Fronthaube ist von einer sensorisch aktivierten Hubvorrichtung von einer Ruheposition in eine demgegenüber angehobene Aufprallposition verlagerbar.

Aus der FR 2 896 213 A1 ist eine Stoßfängeranordnung bekannt, die in Fahrtrichtung gegenüber dem Kraftfahrzeug mit einem externen Stellelement ausfahrbar ist.

Aufgabe der vorliegenden Erfindung ist es, eine Vorrichtung zur Verfügung zu stellen, mit der es möglich ist, ein hohes Maß an Aufprallenergie in Verformungsenergie umzuwandeln bei gleichzeitig geringem Bauraumbedarf.

Die zuvor genannte Aufgabe wird erfindungsgemäß mit einem Bauteil für ein Kraftfahrzeug gemäß Patentanspruch 1 gelöst.

Vorteilhafte Ausführungsformen der vorliegenden Erfindung sind Bestandteil der abhängigen Patentansprüche.

Das Bauteil für ein Kraftfahrzeug, insbesondere Crashbox, aufweisend eine Innenkomponente und eine Außenkomponente, wobei die Innenkomponente und die Außenkomponente relativ teleskopartig zueinander bewegbar sind, ist dadurch gekennzeichnet, dass die Innenkomponente und die Außenkomponente in ihrem Querschnitt jeweils rechteckig konfiguriert sind und die Innenkomponente ein Mehrkammerhohlprofil aus Leichtmetall ist, wobei an die Innenkomponente eine Rastnase angeschweißt ist und wobei die Rastnase im Aktivierungszustand an einem Verriegelungsmechanismus einrastet.

Besonders vorteilig bei der vorliegenden Erfindung ist, dass bei einer Reduzierung des Bauraums die gleiche Crashsicherheit gegeben ist, da der gleiche Weg zum Abbau von Aufprallenergie in Verformungsenergie zur Verfügung steht, obwohl sich das Bauraumabmaß im Ruhezustand verringert.

Ein weiterer Vorteil der vorliegenden Erfindung ist, dass bei gleichen Bauraumabmaßen eine Erhöhung der Crashsicherheit durch eine künstliche Bauraumvergrößerung im Crashfall geschaffen wird. Durch das teleskopartige Ausfahren des Bauteils in den Aktivierungszustand erfährt der Weg zum Abbau von Unfallenergie und zur Umwandlung der Aufprallenergie in Verformungsenergie eine Verlängerung. Im Rahmen der Erfindung kann der Verriegelungsmechanismus dabei an der Außenkomponente oder aber auch an der Flanschplatte angeordnet sein. Die Rastnase ist bevorzugt an der Innenkomponente angeschweißt, so dass hier nicht durch eine herausgetrennte oder aber eine ausgestellte Rastnase ein Schwächung der Innenkomponente erfolgt.

In einer vorteilhaften Ausführungsvariante ist die Relativbewegung durch ein mechanisches, pyrotechnisches, elektromechanisches, pneumatisches und/oder hydraulisches Stellmittel ausführbar. Ein sich hieraus ergebender Vorteil ist, dass das Stellmittel die Relativbewegung aktiv ausführt. Das Stellmittel bringt Energie in das Bauteil ein, um beispielsweise die Innenkomponente durch teleskopartiges Ausfahren aus der Außenkomponente in ihrer Lage zu verändern, so dass sich im Falle eines vorderen Stoßfängersystems eine Verschiebung des vorderen an der Innenkomponente festgelegten Querträgers in Fahrtrichtung nach vorne ergibt.

Im Rahmen der Erfindung kann dabei der Stoßfänger mit dem Querträger nach vorne verschoben werden oder aber beispielsweise auch nur der Querträger. Durch die Verschiebung mit dem Stellmittel ergibt sich eine besonders schnelle Reaktionsmöglichkeit, die im Falle eines Unfalls, beispielsweise durch einen möglichen Aufprall, zur Erhöhung des Crashenergieabsorptionsvermögens zwingend erforderlich ist.

In einer besonders vorteiligen Ausführungsvariante ist das Stellmittel eine Feder, vorzugsweise eine Schraubenfeder. Hierdurch ergibt sich der Vorteil, dass eine Feder als mechanisches Stellmittel besonders einfach, kostengünstig und produktionssicher in das Bauteil für ein Kraftfahrzeug eingesetzt werden kann. Die Feder ist dabei im Rahmen der Langlebigkeit des Stoßfängersystems besonders unanfällig für Fehlfunktionen. Das System ist somit besonders kostengünstig herstellbar und in seiner Funktionsweise mit einem hohen Maß an Zuverlässigkeit einsetzbar.

Die Feder ist dabei in einer bevorzugten Ausführungsvariante in einem verriegelten Ruhezustand vorgespannt, wird im Falle der Aktivierung des Bauteils entriegelt und bewegt die Innenkomponente und die Außenkomponente relativ zueinander, so dass ein Aktivierungszustand eingenommen wird. Im Aktivierungszustand verriegelt das System wiederum, so dass eine Verlängerung des Weges zur Absorption der Crashenergie gegeben ist.

In einer weiteren bevorzugten Ausführungsvariante wird die Verriegelung des Ruhezustands über einen durch eine Erkennungssensorik angesteuerten Verriegelungsmechanismus entriegelt. Es kann dabei im Rahmen der Erfindung auf die bereits im Kraftfahrzeug vorhandene Erkennungssensorik zur Detektion eines potentiellen Unfalls zurückgegriffen werden. Diese ist oft in Kraftfahrzeugen als Crashfrühwarnsensorik vorhanden und kann dazu genutzt werden, das Bauteil zur Absorption von Crashenergie zu aktivieren.

Dabei kann die Verriegelung des Ruhezustands in Form einer Soll-Bruchstelle vorhanden sein. Im Falle eines Fahrzeugcrashs würde diese Soll-Bruchstelle brechen und zu einem Aktivieren bzw. Ausfahren des Systems führen. Über die Soll-Bruchstelle kann dann im Falle der Aktivierung des Systems erkannt werden, dass das System ausgefahren ist. Hierdurch ist eine einwandfreie Zuordnung der Erneuerung des Systems möglich, um ein einfaches Zurückschieben des ausgelösten Systems nach einem Unfall oder aber nach einer Fehlauslösung zu verhindern. Dies könnte sonst zur Folge haben, dass das System beim erneuten Aktivieren nicht ordnungsgemäß arbeitet. Die Detektion des aktivierten Systems erfolgt dann analog einem Airbag, bei dem der ausgefahrene Airbag durch Soll-Bruchstellen im Armaturenbrett und den ausgefahrenen Airbag Luftschlauch erkennbar ist.

Im Rahmen der Erfindung kann jedoch auch eine eigene Erkennungssensorik für das Bauteil in das Kraftfahrzeug eingesetzt werden. Die Erkennungssensorik detektiert einen Unfall bereits vor seinem potentiellen Eintreten und gibt entsprechende Regelungs- und Steuerungssignale aus, die einen Verriegelungsmechanismus des Ruhezustands ansteuern und diesen dadurch entriegeln. Hierbei ist es beispielsweise vorstellbar, dass der Verriegelungsmechanismus durch einen eingebauten Aktuator entriegelt wird.

Der Aktuator kann im Rahmen der Erfindung wiederum mechanisch, pyrotechnisch, elektromechanisch, pneumatisch und/oder hydraulisch betätigbar sein.

In einer weiteren bevorzugten Ausführungsvariante ist das Stellmittel durch eine Erkennungssensorik aktivierbar. Ist im Rahmen der Erfindung ein rein mechanisches Stellmittel eingesetzt, so erfolgt dessen Aktivierung bereits durch die Entriegelung des Ruhezustands. Sind pyrotechnische, elektromechanische, pneumatische und/oder hydraulische Stellmittel oder aber Mischformen der zuvor genannten Stellmittel eingesetzt, so ist zusätzlich zu der Entriegelung eine Aktivierung des Stellmittels erforderlich. Im Rahmen der Erfindung erfolgt diese Aktivierung auch über Regelungs- und Steuerungssignale einer bereits vorhandenen oder aber speziell für das Crashenergieabsorptionssystem installierten Erkennungssensorik.

In einer weiteren bevorzugten Ausführungsform ist die Verriegelung des Aktivierungszustands durch wenigstens eine Rastnase und ein der Rastnase zugeordnetes Widerlager ausgebildet. Dies bietet insbesondere den Vorteil, dass die Verriegelung des Aktivierungszustands rein mechanisch erfolgt. Diese Verriegelung ist besonders kostengünstig und produktionssicher herstellbar und bietet ein Höchstmaß an Unanfälligkeit gegenüber Fehlern, so dass das System bei Aktivierung mit den an ihn gestellten Anforderungen zuverlässig im Aktivierungszustand verriegelt.

Im Rahmen der Erfindung ist es jedoch auch vorstellbar, dass die Rastnase nicht nur rein mechanisch, beispielsweise durch einen Federmechanismus bzw. eine in die Rastnase eingebrachte Spannung selber einrastet, sondern beispielsweise auch durch aktive Verstellung einrastet. Die aktive Verstellung kann beispielsweise in Form eines elektromechanisch getätigten Aktuators erfolgen. Auch sind pyrotechnische, pneumatische und/oder hydraulische Aktivierungen der Verriegelung des Aktivierungszustands vorstellbar.

In einer besonders bevorzugten Ausführungsform ist die Rastnase auf der Außenseite der Außenkomponente angeordnet und in ein auf der Innenkomponente angeordnetes Langloch einrastbar. Im Rahmen der Erfindung fährt die Innenkomponente mit einem daran festgelegten Querträger aus der Außenkomponente aus. Die Außenkomponente ist fest mit der Fahrzeugkarosserie verbunden. Auf der Außenkomponente befindet sich eine Rastnase, die bei voll ausgefahrener Innenkomponente in ein zu dieser korrespondierendes Langloch einrastet.

Im Rahmen der Erfindung ist es jedoch auch vorstellbar, dass zunächst die Innenkomponente teleskopartig aus der Außenkomponente bis zu einem Endanschlag ausfährt und dann durch den Aufprall wieder bis zu einem bestimmten Punkt in die Außenkomponente zurückfährt. Die Rastnase rasten dann erst beim Zurückfahren der Innenkomponente in die Außenkomponente ein. Hierdurch kann beispielsweise ein elastischer Federweg von wenigen Zentimetern geschaffen werden, der beispielsweise im Falle eines Fußgängercrashs die gesetzlichen Anforderungen an den Fußgängerschutz erfüllt. Nach dem Zurückfahren der Innenkomponente erfolgt ein Einrasten, so dass hier eine starre Verbindung entsteht und die Außen -und Innenkomponente als Crashbox Energie in Form von Umformenergie absorbieren.

In einer weiteren besonders bevorzugten Ausführungsform ist auf der Außenkomponente eine umlaufende Nut ausgebildet, in die eine Auftulpung der Innenkomponente einrastbar ist. Im Rahmen der Erfindung kann die umlaufende Nut in der Außenkomponente auch in Form einer Sicke ausgebildet sein. Die Auftulpung der Innenkomponente wiederum kann in Form einer außenumlaufenden Sicke oder aber einer Aufweitung des Endes der Innenkomponente an der Innenkomponente ausgebildet sein.

Beim teleskopartigen Ausfahren der Innenkomponente aus der Außenkomponente rastet die Auftulpung der Innenkomponente in die umlaufende Nut der Außenkomponente ein. Hierdurch ergibt sich wiederum eine formschlüssige starre Verbindung zwischen Innen- und Außenkomponente, so dass der gesamte Deformationsweg starr verbunden verlängert ist.

Vorzugsweise sind zwischen der Innenkomponente und der Außenkomponente Führungsmittel angeordnet. Im Rahmen der Erfindung sind Führungsmittel, beispielsweise Rollen und/oder Kugeln, die die Reibung zwischen Innenkomponente und Außenkomponente verringern und eine besonders exakte Führung der teleskopartigen Relativbewegung sicherstellen. Die Führungsmittel können beispielsweise aber auch in Form von Abstandhaltern ausgebildet sein, die entweder als externes Bauteil eingebracht sind und/oder als Sicken oder Nuten an der Innenkomponente und/oder der Außenkomponente selbst ausgebildet sind, so dass kein vollflächiges Anliegen zwischen Innenkomponente und Außenkomponente erfolgt. Die Führungsmittel dienen dabei einem Tolleranzausgleich zwischen der Innenkomponente und der Außenkomponente. Darüber hinaus ist es über die Führungsmittel möglich eine gleitreibungsarme Teleskopisierung von Innenkomponente zur Außenkomponente zu realisieren.

Hierdurch wird für die Lebensdauer eines Kraftfahrzeugs sichergestellt, dass die Innenkomponente und die Außenkomponente nicht beispielsweise durch Korrosion gegenseitig festsitzen. Damit wird wiederum sichergestellt, dass die teleskopartige Relativbewegung fehlerfrei und zuverlässig jederzeit ausführbar ist.

In einer weiteren bevorzugten Ausführungsform besteht die Innenkomponente und/oder Außenkomponente aus einer Leichtmetalllegierung. Besonders bevorzugt wird hier ein Werkstoff, der aus einer Aluminiumlegierung besteht, eingreift. Der Aluminiumwerkstoff weist ein besonders gutes Crashenergieabsorptionsvermögen bei geringem Gewicht auf. Eine weitere positive Eigenschaft einer Aluminiumlegierung besteht darin, dass eine komplexe Querschnittsgeometrie von Innenkomponente und/oder Außenkomponente besonders kostengünstig bei hoher Maßhaltigkeit produzierbar ist.

Im Rahmen der Erfindung ist es jedoch auch vorstellbar, dass die Innenkomponente und die Außenkomponente aus verschiedenen Werkstoffen gefertigt sind. Beispielsweise kann die Innenkomponente aus einer Leichtmetalllegierung bestehen, wo hingegen die Außenkomponente aus einem Verbundwerkstoff oder aber einem Stahlwerkstoff besteht. In der bevorzugten Ausführungsvariante der vorliegenden Erfindung sind die Innenkomponente und die Außenkomponente der Crashbox aus einer Aluminiumlegierung gefertigt. Der Querträger kann wiederum im Rahmen der Erfindung auch aus einem Leichtmetall oder aber aus einem Stahlwerkstoff bestehen.

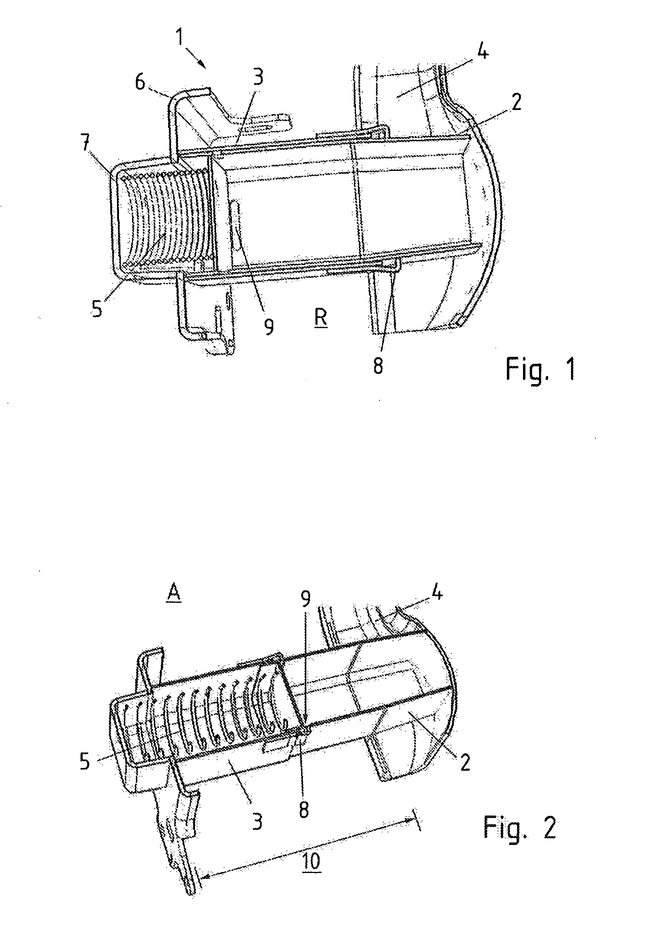

Weitere Vorteile, Merkmale, Eigenschaften und Aspekte der vorliegenden Erfindung ergeben sich aus der folgenden Beschreibung, bevorzugte Ausführungsformen anhand der schematischen Zeichnungen. Diese dienen dem einfachen Verständnis der Erfindung. Die nachfolgend beschriebenen Figuren 1 bis 5 dienen lediglich zur Illustrierung der beanspruchten Erfindung und sind nicht Ausführungsform der Erfindung, für die Schutz begehrt wird. Es zeigen:
- Figur 1: eine Schnittansicht einer Crashbox im verriegelten Ruhezustand;
- Figur 2: eine Schnittansicht einer Crashbox im verriegelten Aktivierungszustand;
- Figur 3: eine perspektivische Ansicht einer Crashbox im verriegelten Aktivierungszustand;
- Figur 4: eine perspektivische Schnittansicht einer Crashbox im verriegelten Aktivierungszustand;
- Figur 5: eine Schnittansicht einer Crashbox mit Führungsmitteln;
- Figuren 6a und 6b: eine weitere Ausführungsvariante der erfindungsgemäßen Crashbox und
- Figuren 7a und 7b: Ausführungsvarianten der erfindungsgemäßen Crashbox.

In den Figuren werden für gleiche oder ähnliche Teile dieselben Bezugszeichen verwendet, wobei entsprechende oder vergleichende Vorteile erreicht werden, auch wenn eine wiederholte Beschreibung aus Vereinfachungsgründen entfällt.

Figur 1 zeigt eine Crashbox 1 mit einer Innenkomponente 2 und einer Außenkomponente 3. Am auf die Bildebene bezogenen rechtseitigen Ende der Innenkomponente 2 ist ein Querträger 4 angeordnet. Die Innenkomponente 2 sitzt innerhalb der Außenkomponente 3. Die Crashbox 1 befindet sich in einem Ruhezustand R. Am auf die Bildebene bezogenen linksseitigen Ende der Außenkomponente 3 ist eine Feder 5 angeordnet. Die Feder 5 befindet sich in einem vorgespannten Ruhezustand R. Die Außenkomponente 3 ist an einer hier dargestellten Flanschplatte 6 angeordnet, die an einem hier nicht dargestellten Kraftfahrzeug appliziert wird. Die Flanschplatte 6 weist eine Federtasche 7 auf, in der die Feder 5 ein Widerlager findet.

Auf der Außenkomponente 3 sind weiterhin Rastnasen 8 angeordnet, die wiederum während und/oder bei und/oder nach der Aktivierung der Crashbox 1 in Langlöcher 9 eingreifen. Die Langlöcher 9 sind wiederum auf der Innenkomponente 2 angeordnet.

Figur 2 zeigt den verriegelten Aktivierungszustand A der Crashbox 1. Hierbei hat sich die Feder 5 durch Entriegelung des Ruhezustands R entspannt und dadurch die Innenkomponente 2 relativ zu der Außenkomponente 3 teleskopartig ausgefahren. Die Rastnasen 8 der Außenkomponente 3 sind in Langlöcher 9 der Innenkomponente 2 eingerastet, so dass sich ein schubstarres formschlüssiges Gesamtsystem ergibt. Der Weg 10 zur Energieabsorption hat sich dadurch im hier dargestellten Beispiel im Wesentlichen verdoppelt.

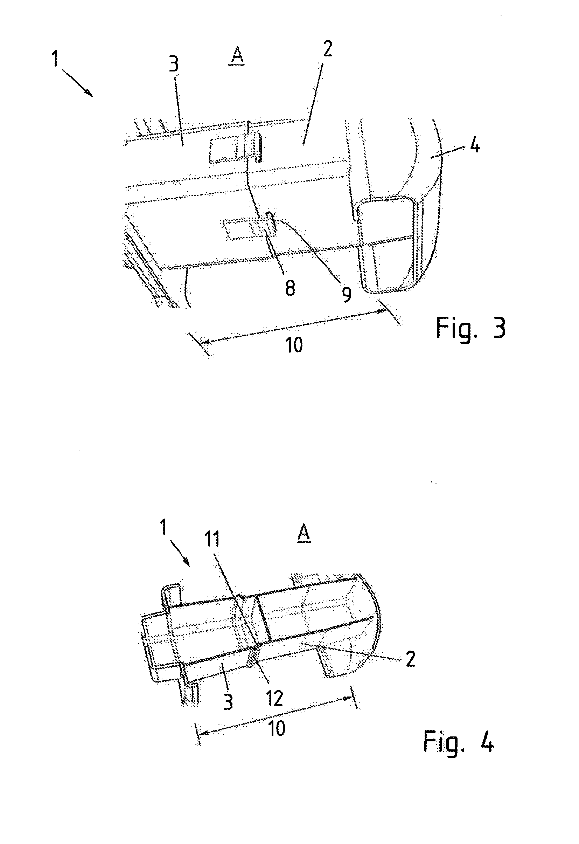

Figur 3 zeigt den verriegelten Aktivierungszustand A in einer perspektivischen Ansicht. Hierbei sind die Rastnasen 8 der Außenkomponente 3 in die Langlöcher 9 der Innenkomponente 2 eingerastet und der Weg 10 zur Crashenergieabsorption hat sich dadurch verlängert. Die Langlöcher 9 können aber auch als Widerlagerkomponenten, beispielsweise Aufschweißungen, ausgebildet sein, um nicht durch die Aussparung des Langlochs 9 die Innenkomponente 2 unnötig zu schwächen. Die Innenkomponente 2 und die Außenkomponente 3 sind hierbei im Wesentlichen im Querschnitt rechteckförmig konfiguriert dargestellt. Im Rahmen der Erfindung ist es jedoch auch vorstellbar, runde, elliptische, trapezförmige, sternförmige und/oder in einer Mischform konfigurierte Innenkomponente 2 und Außenkomponenten 3 einzusetzen.

Figur 4 zeigt eine andere Ausführungsvariante der Verriegelung im Aktivierungszustand A. Hierbei ist eine am Ende der Innenkomponente 2 gezeigte Auftulpung 11 in eine umlaufende Sicke 12 der Außenkomponente 3 eingerastet. Auch hierdurch erfolgt eine schubstarre, formschlüssige Verriegelung im Aktivierungszustand A und dadurch eine Verlängerung des Wegs 10 zur Crashenergieabsorption.

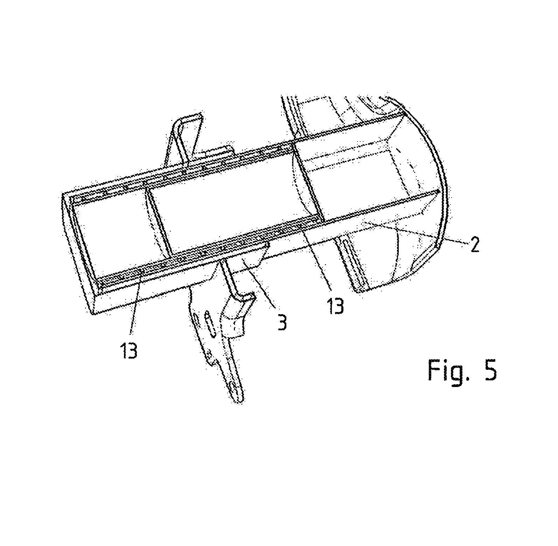

Figur 5 zeigt eine Schnittansicht einer Crashbox 1, wobei zwischen der Innenkomponente 2 und der Außenkomponente 3 Führungsmittel 13 in Form von Rollen angeordnet sind. Die Rollen ermöglichen eine besonders geringe Reibung zwischen Innenkomponente 2 und Außenkomponente 3, so dass jederzeit ein teleskopartiges Ausfahren sichergestellt ist.

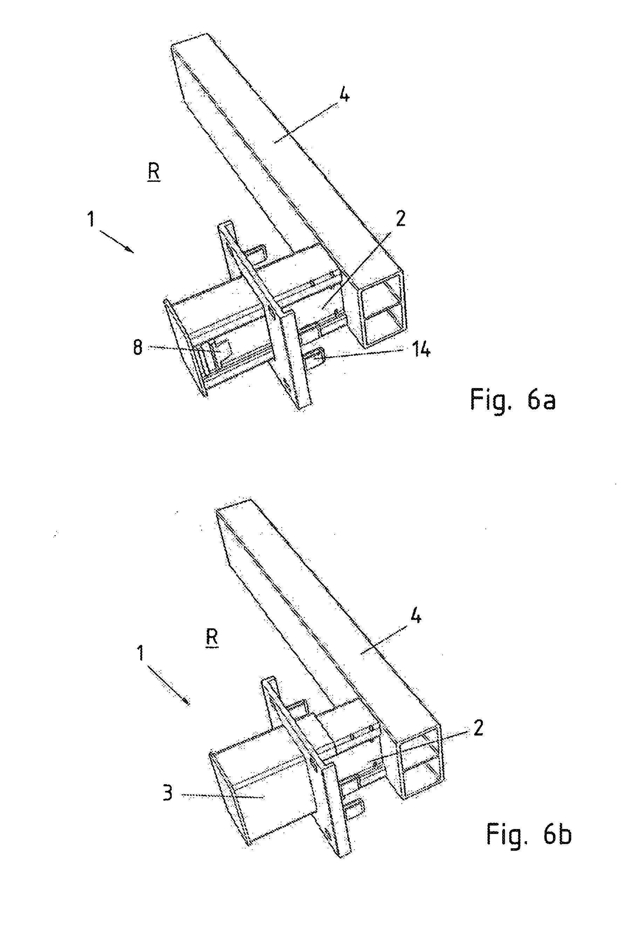

Figur 6a zeigt eine weitere Ausführungsvariante einer erfindungsgemäßen Crashbox 1. Bei der in der Figur 6a ff. gezeigten Ausführungsvariante handelt es sich vorzugsweise um ein Aluminiummehrkammer-Hohlprofil. Dies hat die besondere Eigenschaft, dass eine bessere Führung von Innen- zu Außenkomponente 2, 3 ermöglicht wird, bei einer annähernd gleichmäßigen Energieabsorption über die gesamte Länge der aktivierten ausgefahrenen Crashbox 1. Die Crashbox 1 besteht dabei aus einer Innenkomponente 2 und einer nur in Figur 6b dargestellten Außenkomponente 3. Sowohl die Innenkomponente 2 als auch die Außenkomponente 3 sind im Querschnitt im Wesentlichen rechteckförmig konfiguriert. Dies bietet den Vorteil, dass die Innen- und Außenkomponente 2, 3 aus Strangpressprofilen hergestellt sind. An der Innenkomponente 2 ist, wie in Figur 6a ersichtlich, eine Rastnase 8 angeschweißt. Die Rastnase 8 kommt an einem Verriegelungsmechanismus 14 im Falle des Aktivierungszustands zum einrasten. Bei der Rastnase 8 handelt es sich dabei um eine angeschweißte Komponente, um die Innenkomponente 2 nicht durch Löcher, Ausnehmungen oder dergleichen zu schwächen.

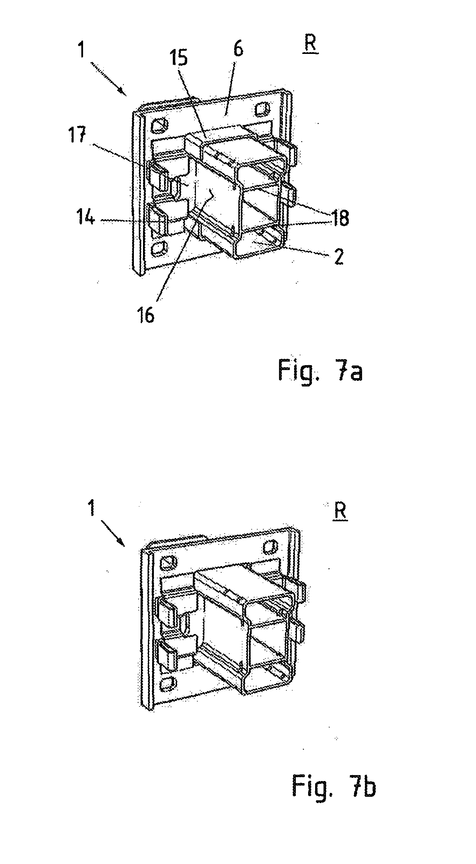

Figuren 7a und 7b zeigen zwei Ausführungsvarianten der erfindungsgemäßen Crashbox 1. Zu erkennen ist, dass die Innenkomponente 2 aus einem Mehrkammerhohlprofil besteht. Die Innenkomponente 2 wird von einer Flanschplatte 6 geführt, wobei an der Flanschplatte 6 wiederum der Verriegelungsmechanismus 14 festgelegt ist. Die Flanschplatte 6 weist, wie in Figur 7a gezeigt, spezielle Führungsschienen 15 zur Führung der Innenkomponente 2 auf. Der Verriegelungsmechanismus 14 greift dabei in eine seitliche Sicke 16 der Innenkomponente 14 ein. An dem Verriegelungsmechanismus 14 ist dazu eine Schieberkante 17 ausgebildet, die speziell an den Querschnitt der Sicke 12 der Innenkomponente 2 angepasst ist. Im Falle der Aktivierung greift der Verriegelungsmechanismus 14 dann an der hier nicht näher dargestellten Rastnase 8 ein. Das Mehrkammer-Hohlprofil weist weiterhin Innenstege 18, die in einem Dickenbereich zwischen 1 und 3 Millimeter liegen sollten, auf. Hierdurch entsteht der Vorteil, dass mit dem Aluminiummehrkammer-Hohlprofil eine einfachere Variation der Wanddicke als bei Stahl ermöglicht wird.

Figur 7b zeigt eine weitere Ausführungsvariante, bei der auf die Führungsschienen 15 verzichtet ist. Dies bietet insbesondere den Vorteil, dass die Flanschplatte 6 bei nahezu gleicher Führungsgenauigkeit kostengünstiger herstellbar ist.

### Bezugszeichen:

- 1-: Crashbox
- 2-: Innenkomponente
- 3-: Außenkomponente
- 4-: Querträger
- 5-: Feder
- 6-: Flanschplatte
- 7-: Federtasche
- 8-: Rastnase
- 9-: Langlöcher
- 10-: Weg
- 11-: Auftulpung
- 12-: Sicke
- 13-: Führungsmittel
- 14-: Verriegelungsmechanismus
- 15-: Führungsschienen
- 16-: Sicke
- 17-: Schieberkante
- 18-: Innensteg

- R-: Ruhezustand
- A -: Aktivierungszustand

## Patentansprüche

1. Bauteil für ein Kraftfahrzeug, insbesondere Crashbox (1) für ein Kraftfahrzeug, aufweisend eine Innenkomponente (2) und eine Außenkomponente (3), wobei die Innenkomponente (2) und die Außenkomponente (3) relativ teleskopartig zueinander bewegbar sind und das Bauteil von einem verriegelten Ruhezustand (R) durch ein Stellmittel in einen verriegelten Aktivierungszustand (A) ausfahrbar ist, **dadurch gekennzeichnet, dass** die Innenkomponente (2) und die Außenkomponente (3) in ihrem Querschnitt jeweils rechteckig konfiguriert sind und die Innenkomponente (2) ein Mehrkammerhohlprofil aus Leichtmetall ist, wobei an die Innenkomponente (2) eine Rastnase (8) angeschweißt ist und wobei die Rastnase (8) im Aktivierungszustand (A) an einem Verriegelungsmechanismus (14) einrastet.

2. Bauteil nach Anspruch 1, **dadurch gekennzeichnet, dass** die Relativbewegung durch ein mechanisches, pyrotechnisches, elektromechanisches, pneumatisches und/oder hydraulisches Stellmittel ausführbar ist.

3. Bauteil nach Anspruch 1 oder 2, **dadurch gekennzeichnet, dass** das Stellmittel ein Feder (5) ist, vorzugsweise eine Schraubenfeder.

4. Bauteil nach einem der Ansprüche 1 bis 3, **dadurch gekennzeichnet, dass** die Verriegelung des Ruhezustandes (R) über einen durch eine Erkennungssensorik angesteuerten Verriegelungsmechanismus entriegelbar ist.

5. Bauteil nach einem der Ansprüche 1 bis 4, **dadurch gekennzeichnet, dass** das Stellmittel durch eine Erkennungssensorik aktivierbar ist.

6. Bauteil nach einem der Ansprüche 1 bis 5, **dadurch gekennzeichnet, dass** die Verriegelung des Aktivierungszustandes (A) durch wenigstens eine Rastnase (8) und ein der Rastnase (8) zugeordnetes Widerlager ausgebildet ist.

7. Bauteil nach Anspruch 6, **dadurch gekennzeichnet, dass** die Rastnase (8) auf der Außenseite des Außenkomponente (3) angeordnet ist und in ein auf der Innenkomponente (2) angeordnetes Langloch (9) einrastbar ist.

8. Bauteil nach einem der Ansprüche 1 bis 7, **dadurch gekennzeichnet, dass** in der Außenkomponente (3) eine umlaufende Nut ausgebildet ist, in die eine Auftulpung (11) der Innenkomponente (2) einrastbar ist.

9. Bauteil nach einem der Ansprüche 1 bis 8, **dadurch gekennzeichnet, dass** Führungsmittel (13) zwischen Innenkomponente (2) und Außenkomponente (3) angeordnet sind.

10. Bauteil nach einem der Ansprüche 1 bis 9, **dadurch gekennzeichnet, dass** die Innenkomponente (2) und/oder Außenkomponente (3) aus einem Leichtmetall, insbesondere einer Aluminiumlegierung, bestehen.

## Claims

1. Component for a motor vehicle, in particular crashbox (1) for a motor vehicle, comprising an internal component (2) and an external component (3), wherein the internal component (2) and the external component (3) are telescopically movable relative to each other and the component is extendable from a locked stand-by mode (R), using an adjustment means, to a locked activation mode (A), **characterised in that** the internal component (2) and the external component (3) each are of a cross-sectional rectangular configuration and the internal component (2) is a multi-chamber hollow section made of light metal, wherein a detent lug (8) is welded to the internal component (2) and wherein the detent lug (8) engages, in the activation mode (A), onto a locking mechanism (14).

2. Component according to claim 1, **characterised in that** the relative movement can be performed by a mechanical, pyrotechnical, electromechanical, pneumatic and/or hydraulic adjustment means.

3. Component according to claim 1 or 2, **characterised in that** the adjustment means is a spring (5), preferably a torsion spring.

4. Component according to one of the claims 1 to 3, **characterised in that** the locking of the stand-by mode (R) can be unlocked using a locking mechanism controlled by detection sensors.

5. Component according to one of the claims 1 to 4, **characterised in that** the adjustment means can be activated by detection sensors.

6. Component according to one of the claims 1 to 5, **characterised in that** the locking of the activation mode (A) is achieved by at least one detent lug (8) and a counter bearing allocated to the detent lug (8).

7. Component according to claim 6, **characterised in that** the detent lug (8) is arranged on the outside of the external component (3) and can be engaged into an elongated hole (9) arranged on the internal component (2).

8. Component according to one of the claims 1 to 7, **characterised in that**, in the external component (3), a circulating groove is formed into which a flare (11) of the internal component (2) can be engaged.

9. Component according to one of the claims 1 to 8, **characterised in that** guide means (13) are arranged between internal component (2) and external component (3).

10. Component according to one of the claims 1 to 9, **characterised in that** the internal component (2) and/or external component (3) consist of a light metal, in particular an aluminium alloy.

## Revendications

1. Composant pour un véhicule automobile, en particulier système amortisseur de chocs (1) pour un véhicule automobile, comprenant un élément interne (2) et un élément externe (3), dans lequel l'élément interne (2) et l'élément externe (3) sont susceptibles d'être déplacés de manière télescopique relativement l'un par rapport à l'autre, et le composant est susceptible d'être déployé par un moyen de commande depuis un état de repos (R) verrouillé vers un état d'activation (A) verrouillé, **caractérisé en ce que** l'élément interne (2) et l'élément externe (3) sont configurés pour avoir chacun une section transversale rectangulaire, et **en ce que** l'élément interne (2) est un profilé creux à chambres multiples en métal léger, un ergot d'enclenchement (8) est soudé sur l'élément interne (2), et l'ergot d'enclenchement (8) s'enclenche sur un mécanisme de verrouillage (14) à l'état d'activation (A).

2. Composant selon la revendication 1, **caractérisé en ce que** le déplacement relatif est susceptible d'être réalisé par un moyen de commande mécanique, pyrotechnique, électromécanique, pneumatique et/ou hydraulique.

3. Composant selon la revendication 1 ou 2, **caractérisé en ce que** le moyen de commande est un ressort (5), de préférence un ressort hélicoïdal.

4. Composant selon l'une quelconque des revendications 1 à 3, **caractérisé en ce que** le verrouillage de l'état de repos (R) est susceptible d'être déverrouillé par l'intermédiaire d'un mécanisme de verrouillage commandé par un système de capteurs d'identification.

5. Composant selon l'une quelconque des revendications 1 à 4, **caractérisé en ce que** le moyen de commande peut être activé grâce à un système de capteurs d'identification.

6. Composant selon l'une quelconque des revendications 1 à 5, **caractérisé en ce que** le verrouillage de l'état d'activation (A) est réalisé par au moins un ergot d'enclenchement (8) et par une butée associée à l'ergot d'enclenchement (8).

7. Composant selon la revendication 6, **caractérisé en ce que** l'ergot d'enclenchement (8) est disposé sur le côté extérieur de l'élément externe (3) et peut être enclenché dans un trou oblong (9) disposé sur l'élément interne (2).

8. Composant selon l'une quelconque des revendications 1 à 7, **caractérisé en ce qu'**une rainure périphérique est réalisée dans l'élément externe (3), dans laquelle une protubérance (11) de l'élément interne (2) peut être enclenchée.

9. Composant selon l'une quelconque des revendications 1 à 8, **caractérisé en ce que** des moyens de guidage (13) sont disposés entre l'élément interne (2) et l'élément externe (3).

10. Composant selon l'une quelconque des revendications 1 à 9, **caractérisé en ce que** l'élément interne (2) et l'élément externe (3) sont dans un métal léger, en particulier un alliage d'aluminium.
